# EUROPEAN PATENT SPECIFICATION

(11) **EP 0 515 202 B1**
(45) Date of publication and mention of the grant of the patent: **13.09.1995**
(21) Application number: 92304648.6
(22) Date of filing: 21.05.1992
(51) Int. Cl.: A01B 1/14

(54) **Horticultural implement**
Gartengerät
Outil de jardinage

(30) Priority: 21.05.1991 GB 9110936
(43) Date of publication of application: 25.11.1992
(73) Proprietor: Malcolm, Alexander Brian, Dunstable, Beds LU6 3SQ (GB)
(72) Inventor: Malcolm, Alexander Brian, Dunstable, Beds LU6 3SQ (GB)
(74) Representative: Raynor, Simon Mark

(56) References cited:
- DE-U- 1 946 197
- GB-A- 356 990
- GB-A- 384 452
- GB-A- 907 271
- GB-A- 2 060 338
- US-A- 1 177 389
- US-A- 2 279 747

## Description

The present invention relates to a horticultural implement. More particularly, but not exclusively, it relates to an implement for use in flower and vegetable gardening to carry out the functions of grubbing, weeding, removal of stones and other such tasks necessary to the preparation and upkeep of the soil.

Hitherto, it has been necessary to use at least two implements to carry out all of the above purposes.

It is known to provide horticultural implements having a plurality of tines, for example from US Patent No 4054178, UK Patent No 1075610, UK Patent No 413055 and UK Patent No 384,452, but these all have tines bent at a right angle. They are thus only suitable for use with a drawing action. Other documents known from the prior art include UK Patents Nos 356990, 412838 and 907271 and Application No 2060338. However these all show single use implements, albeit of improved utility.

From US-A-1177389 it is known an horticultural implement with the features of the preamble of claim 1.

It is an object of the present invention to provide a single tool which may be used to loosen compacted soil and then, by simple inversion, to lift and remove unwanted items such as weeds or stones, and convey them to a nearby waste area or receptacle.

According to the present invention there is provided a horticultural implement comprising a handle and a head, the head comprising at least two first tine members, the ends of which are curved through more than 90° in a first sense so that the points of the tines face generally towards the handle, at least two second tine members having ends which are curved in said first sense but through an angle less than 90°, said second tine members being located between two of said at least two first tine members, and a cross member connecting said second tine members.

Preferably there are two first tine members and two second tine members.

The cross member may extend beyond the second tine members and connect also with the first tine members.

The cross member may be located at a median point of the tines connected by it, between the points thereof and a point of connection to the handle.

The connection to the handle may be a cylinder adapted to surround and engage with an end of the handle. In this case, the four or more tine members may be attached around a part of the periphery of the cylinder.

According to another aspect of the present invention there is provided a head for a horticultural implement substantially as described above.

An embodiment of the present invention will now be more particularly described by way of example and with reference to the accompanying drawings, in which:
FIGURE 1 is a side elevation of the implement;
FIGURE 2 is a perspective view of the implement; and
FIGURE 3 is an end view of the implement.

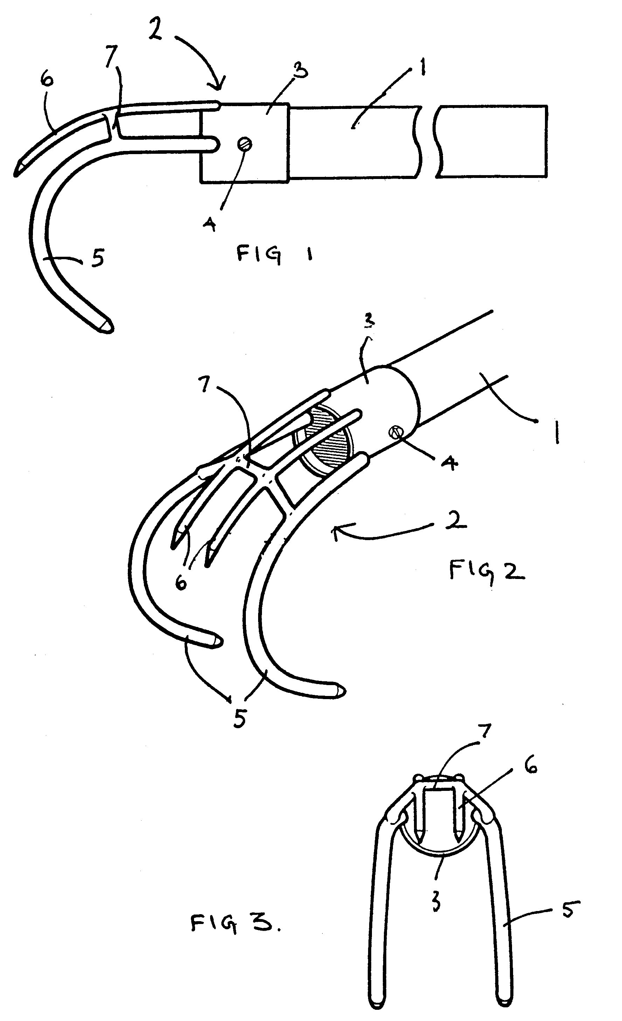

Referring now to the drawings, the implement comprises a handle 1 and a head 2. The handle 1 may be comparatively long for use in vegetable gardens or alternatively, it may be comparatively short for suburban flower gardens or smaller vegetable gardens.

The head 2 comprises a cylinder 3 adapted to fit around and engage with the end of the handle 1, to which it may be attached by a grub screw 4, or by other attachment means.

Extending forwardly from the cylinder 3 are two pairs of tines, a pair of major tines 5 and a pair of minor tines 6. The tines are connected by a cross member 7 at a point intermediate between their points and the cylinder 3. This cross member 7 extends transversely to the general direction of the tines. The tines are substantially round in cross section, as is the cross member 7. The ends of the major tines 5 need not be sharp, as will be seen from their use as described below. The ends of the minor tines 6 may be sharper.

In order to use the implement embodying the present invention, the major tines 5 are forced into the ground and the implement drawn towards the user. It is important that the ends of the major tines 5 face generally towards the user so that the implement can enter the soil in the correct disposition. An angle for the points of the tines of between 40° and 70° to the axis of the handle is preferred. Once the ends of the tines are embedded in the earth, the handle is drawn backwardly and a large part of the tines will come into contact with the earth and break it up or loosen it.

The tool may then be inverted and the minor tines 6 pushed along the surface or just below the surface of the soil to capture any stones or weeds. To this end, the minor tines 6 are curved but face forwardly and the curvature is such that the points of the tines are only at an angle not less than 145° from the axis of the handle 1. Larger angles may be possible, but will not necessarily operate as efficiently.

The cross member 7 also comes into play when the minor tines 6 are used, since it helps to dislodge weeds which are trapped between the minor tines 6 and also helps support the stones and the like which are lifted clear by virtue of being entrapped between the minor tines 6. Indeed, by extending the cross member 7 to the major tines 5, additional weeds may be captured between respective ones of major 5 and minor 6 tines.

The exact size of the head 2 is not important, but it is of such a size that it can be easily handled by its usual operator. Obviously, the spacing between the tines is such that the stones can be picked up or weeds cleared and this must be considered against the advantage of breaking up a large amount of soil with each draw action.

Because the long-handled version of the device allows weeding and cultivating to be carried out from waist level, the implement would be of particular use to handicapped persons unable to stoop to ground level, or to those who are confined to wheelchairs or the like, or even deck chairs.

The handle of the implement is preferably of wood or plastics material and is replaceable in the event of breakage or wear. The head may be of steel or even stainless steel. The prong of the tines need not be sharp, especially not those of the major tines 5.

## Claims

1. A horticultural implement comprising a handle (1) and a head (2), the head comprising at least two first tine members (5), the ends of which are curved through more than 90° in a first sense so that the points of the tines (5) face generally towards the handle (1), at least two second tine members (6) having ends which are curved in said first sense, said second tine members (6) being located between two of said at least two first tine members (5), characterised in that said second tine members are curved through an angle less than 90°, and a cross member (7) connecting said second tine members (6).

2. An implement as claimed in claim 1, characterised in that there are two first tine members (5) and two second tine members (6).

3. An implement as claimed in either claim 1 or claim 2, characterised in that the cross member (7) extends beyond the second tine members (6) and connects also with the first tine members (5).

4. An implement as claimed in any one of claims 1 to 3, characterised in that the cross member (7) is located at a median point of the tines connected by it, between the points thereof and a point of connection to the handle (1).

5. An implement as claimed in any one of the preceding claims, characterised in that a connection to the handle (1) is a cylinder (3) adapted to surround and engage with an end of the handle (1).

## Patentansprüche

1. Ein Gartengerät umfassend einen Stiel (1) und einen Kopf (2), wobei der Kopf mindestens zwei erste Zinken-Teile (5), deren Enden um mehr als 90° in einer ersten Richtung gebogen sind, so daß die Spitzen der Zinken (5) im wesentlichen zum Stiel (1) hin gerichtet sind, und mindestens zwei zweite Zinken-Teile (6) umfaßt, deren Enden in der ersten Richtung gekrümmt sind, wobei die zweiten Zinken-Teile (6) zwischen zwei der wenigstens zwei ersten Zinken-Teile (5) angeordnet sind, **dadurch gekennzeichnet,** daß die zweiten Zinken-Teile um einen Winkel kleiner als 90° gekrümmt sind und ein Querteil (7) die zweiten Zinken-Teile (6) verbindet.

2. Ein Gerät nach Anspruch 1, **dadurch gekennzeichnet,** daß zwei erste Zinken-Teile (5) und zwei zweite Zinken-Teile (6) vorgesehen sind.

3. Ein Gerät nach Anspruch 1 oder 2, **dadurch gekennzeichnet,** daß sich das Querteil (7) über die zweiten Zinken-Teile (6) hinaus erstreckt und auch mit den ersten Zinken-Teilen (5) verbunden ist.

4. Ein Gerät nach einem der Ansprüche 1 bis 3, **dadurch gekennzeichnet,** daß das Querteil (7) an einem mittleren Punkt der dadurch verbundenen Zinken zwischen deren Spitzen und einem Verbindungspunkt mit dem Stiel (1) angeordnet ist.

5. Ein Gerät nach einem der vorhergehenden Ansprüche, **dadurch gekennzeichnet,** daß eine Verbindung mit dem Stiel (1) ein Zylinder (3) ist, der ausgebildet ist, ein Ende des Stiels (1) zu umgeben und mit diesem in Eingriff zu stehen.

## Revendications

1. Outil de jardinage comprenant un manche (1) et une tête (2), la tête comportant au moins deux premières dents (5) dont les extrémités sont recourbées de plus de 90° dans un premier sens afin que les pointes des dents (5) soient tournées de façon générale vers le manche (1), au moins deux secondes dents (6) ayant une extrémité recourbée dans le premier sens, les secondes dents (6) étant placées entre deux des au moins deux premières dents (5), caractérisé en ce que les secondes dents sont recourbées d'un angle inférieur à 90°, et un organe transversal (7) raccorde les secondes dents (6).

2. Outil selon la revendication 1, caractérisé en ce qu'il comporte deux premières dents (5) et deux secondes dents (6).

3. Outil selon la revendication 1 ou 2, caractérisé en ce que l'organe transversal (7) dépasse au-delà des secondes dents (6) et se raccorde aussi aux premières dents (5).

4. Outil selon l'une quelconque des revendications 1 à 3, caractérisé en ce que l'organe transversal (7) est placé en un point médian des dents qu'il raccorde, entre les pointes et un emplacement de raccordement au manche (1).

5. Outil selon l'une quelconque des revendications précédentes, caractérisé en ce qu'un raccord au manche (1) est formé par un cylindre (3) destiné à entourer une extrémité du manche (1) et à coopérer avec celui-ci.
